# EUROPÄISCHE PATENTSCHRIFT

(11) **EP 0 757 195 B1**
(45) Veröffentlichungstag und Bekanntmachung des Hinweises auf die Patenterteilung: **07.06.2000**
(21) Anmeldenummer: 96104763.6
(22) Anmeldetag: 26.03.1996
(51) Int. Cl.: F16J 15/08

(54) **Verfahren zur Herstellung einer Flachdichtung aus Metall**
Metallic gasket production method
Méthode de fabrication d'un joint plat métallique

(30) Priorität: 31.07.1995 DE 19528031
(43) Veröffentlichungstag der Anmeldung: 05.02.1997
(73) Patentinhaber: Federal-Mogul Sealing Systems GmbH, 57562 Herdorf (DE); GKN Sinter Metals Service GmbH, 42477 Radevormwald (DE)
(72) Erfinder: Ernst, Eberhard, Dr., 42857 Remscheid (DE); Majewski, Klaus-Peter, Dipl.-Ing., 51399 Burscheid (DE); Lönne, Klaus, Dipl.-Ing., 51399 Burscheid (DE)

(56) Entgegenhaltungen:
- EP-A- 0 369 033
- EP-A- 0 465 268
- DE-A- 4 120 706
- US-A- 5 205 566

## Beschreibung

Die Erfindung betrifft ein Verfahren zur Herstellung einer ein- oder mehrlagigen Flachdichtung aus Metall, wie insbesondere einer Zylinderkopfdichtung oder einer Auspuffflanschdichtung für Verbrennungskraftmaschinen mit Durchgangsöffnungen und Auflagen aus druckfestem Material auf mindestens einer Metallplatte zum Erzielen einer hohen Dichtpressung und damit einer hohen Abdichtwirkung in definierten Bereichen, wobei die Auflagen aus druckfestem Material auf mindestens einer Metallplatte durch Sintern geformt werden.

Flachdichtungen, wie insbesondere Zylinderkopfdichtungen für Verbrennungskraftmaschinen werden in vielen Fällen aus Metallplatten hergestellt, wobei die Dichtung einlagig aus einer Metallplatte oder mehrlagig aus mehreren aufeinanderliegenden Metallplatten bestehen kann. Zur Verbesserung der Abdichtwirkung ist es üblich die Bereiche vor allem rund um die Durchgangsöffnungen auf mindestens einer Metallplatte zu profilieren, indem man die Metallplatten im Siebdruckverfahren mit Auflagen aus Kunstharzen oder Elastomeren vorsieht oder indem man die Metallplatten sickt oder an den Öffnungsrändern umfalzt, Stopperauflagen auflegt oder aufschweißt.

In einigen Anwendungsfällen, zum Beispiel zur Abdichtung der Verbrennungsgase ist es erforderlich zur Erhöhung der Abdichtwirkung mit hohen Dichtpressungsdrücken zu arbeiten. Elastomere Auflagen oder Auflagen aus Kunstharzen sind dafür nicht ausreichend druckfest, auch wenn sie wie aus der US-PS 3 794 333 bekannt, aus gefüllten Epoxidharzen bestehen. Sicken alleine in den Metallblechen sind in vielen Fällen nicht ausreichend, um eine geeignete Abdichtung zu erzeugen. Auf der Metallplatte aufliegende Metallblechringe oder Umfalzungen der Öffnungsränder lassen sich bei den meist erforderlichen Auflagendicken unter 0,1 mm nach der bestehenden Technologie nur aufwendig und mit hohen Kosten herstellen und montieren.

Aus der EP 0465268 A1 ist ein thermisches Spritzverfahren zur Herstellung von druckfesten Auflagen zu entnehmen. Durch das beschriebene Flammspritzverfahren wird die Oberfläche der Auflagen porös, so daß die Dichtfunktion an diesen Stellen nicht gegeben ist. Überdies ist es schwierig, genaue Konturen oder präzise Topographien herzustellen.

Die EP 0369033 A1 offenbart eine Flachdichtung mit Auflagen, die durch einen Sinterprozeß gebildet sind. Die Auflagen sind nicht auf die Metallage aufgesintert, sondern bestehen aus einem Sinterstück. Sehr dünne Auflagen wie sie bei gattungsgemäßen Flachdichtungen angestrebt werden, können so nur schwer gehandhabt werden.

Der vorliegenden Erfindung liegt daher die Aufgabe zugrunde ein Verfahren zur Herstellung einer Flachdichtung gemäß Oberbegriff des Hauptpatentanspruches zu schaffen, deren Auflagen aus druckfestem Material auch gegenüber sehr hohen Dichtpressungsdrücken beständig sind und deren Auflagen aus druckfestem Material in einfachen und kostengünstigen Verfahren in Dicken von gegebenenfalls unter 0,1 mm mit hoher Präzision auf der Dichtungsplatte herzustellen sind.

Erfindungsgemäß wird diese Aufgabe durch die Merkmale des Anspruchs 1 gelöst. Vorteilhafte Ausgestaltungen der Erfindung sind in den Unteransprüchen dokumentiert.

Durch den Zusatz von Bindemittel in Lösungsmitteln fließfähig gemachte pulverförmige Materialien können mit hoher Präzision in der gewünschten Kontur und Dicke im Siebdruckverfahren oder Schablonenspritzen aufgebracht werden. So lassen sich beispielsweise Auflagen erzeugen, die um die Brennraumöffnungen herum unterschiedliche Höhen oder Breiten aufweisen. Auf einfache Art und Weise läßt sich jede beliebige Topographie erzeugen. Für den Sintervorgang werden die Bindemittel entfernt, jedoch können geringfügige Mengen des Bindemittels als Reaktionspartner für den Sinterprozeß zurückbleiben. Die Auflagen aus Metallpulver erhalten durch den Sintervorgang eine solch hohe Festigkeit, daß sie gegenüber hohen Dichtungsdrücken beständig sind.

Als pulverförmige sinterfähige Materialen werden bevorzugt Metallpulver oder Metalllegierungspulver mit Sintertemperaturen oberhalb etwa 250°C und unterhalb etwa 1000°C eingesetzt. Bewährt haben sich besonders Bronzepulver.

Der Anteil des Metallpulvers sollte vorzugsweise im Bereich von 20 bis 70 Vol % liegen.

Bindemittel können wie aus der DE-PS 4 120 706 bekannt Wachse oder Kunstharze die beim Abdampfen des Lösungsmittels das Metallpulver zu formfesten Auflagen binden, und die beim weiteren Erhitzen weitgehend rückstandsfrei unter Pyrolyse abdampfen. Lösungsmittel können Alkohol, Toluol oder Trichlorethylen sein.

Die quantitative Zusammensetzung der sinterfähigen Auftragsmasse richtet sich nach dem Anwendungsfall. Metallpulver beziehungsweise Metallegierungspulver, Bindemittel und Lösungsmittel müssen zu einer auftragsfähigen festflüssigen Auftragsmasse unter Variation der Bestandteilsmengen vermischt werden.

Durch das Sintern werden die druckfesten Sinterauflagen mit den Dichtungsmetallplatten aus bevorzugt Stählen für die meisten Anwendungsfälle ausreichend fest verbunden. Falls erforderlich, können auf die Metallplatte vor dem Auftrag der sinterfähigen Materialien Haftmittel aus Bindemitteln oder haftvermittelnden Lötzusatzstoffen aufgetragen werden.

Durch die Erfindung sind somit Flachdichtungen mit Auflagen hoher Druckfestigkeit geschaffen. Die Auflagen sind relativ einfach und dadurch wirtschaftlich in der Massenfertigung durch Siebdrucken oder Schablonenspritzen auf die Metallplatte mit hoher Präzision der Konturen und der Dicke auftragbar. Während vor allem die Sinterauflagen ringförmig die Brennräume umgebend aufgetragen sind und dort die Dichtpressung verstärken, ist es auch möglich die Sinterauflagen in anderen Bereichen der Metallplatte aufzutragen. Je nach Anwendungsfall sind die druckfesten Auflagen mit Sickungen oder Elastomerauflagen und Kunstharzauflagen auf der Metallplatte kombiniert. Bei mehrlagigen Metalldichtungen können dabei die druckfesten Auflagen auf eine oder mehrere der Metallplatten aufgetragen sein.

Die Abbildungen 1 - 6 zeigen Querschnittsbilder von ein- oder mehrlagigen Metalldichtungen am Brennraumrand mit erfindungsgemäßen Auflagen aus druckfestem Material.

In Figur 1 ist auf das zentrale Trägerblech (1) am Brennraumrand (2) die druckfeste Auflage aus aufgesintertem Material aufgetragen. Die beiden aufliegenden Deckbleche sind mit Abstand zum Brennraumrand (2) gesickt, so daß beim Einbau die Sicken (6, 7) bei hohem Dichtpressungsdruck auf der druckfesten Auflage (3) nur auf das Niveau der druckfesten Auflage zusammengedrückt werden. In Figur 2 ist die druckfeste Auflage (3') auf die Unterseite des oberen Deckbleches (5') und in Figur 3 sind jeweils auf das untere und das obere Deckblech (5", 4'') die druckfesten Auflagen (3') aufgetragen.

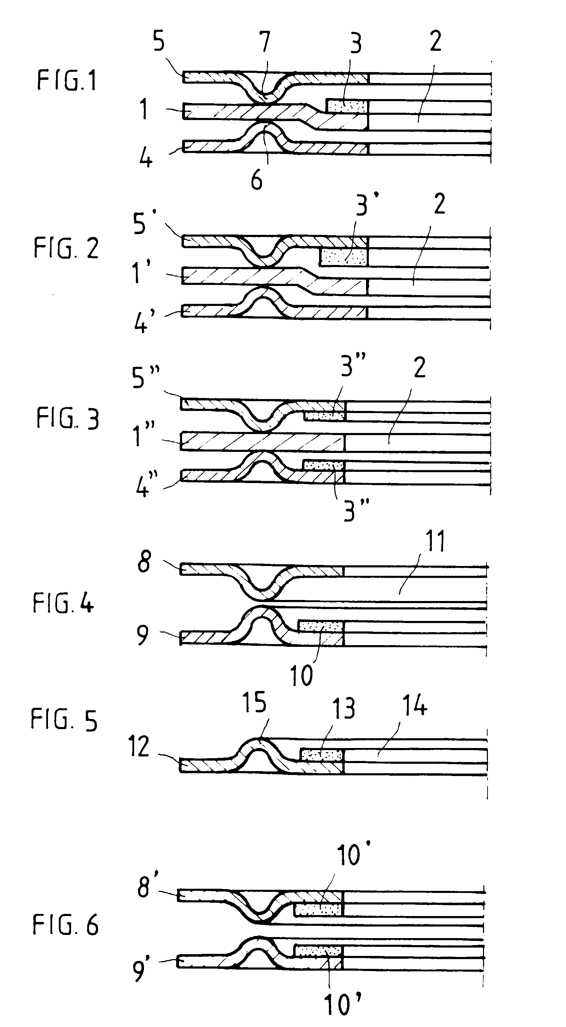

In Figur 4 und 6 bestehen die Dichtungen aus zwei aufeinanderliegenden und mit Abstand zum Brennraumrand gesickten Metallblechen (8,9) auf das untere Metallblech (9) ist die druckfeste Auflage (10) am Brennraumrand (11) in Figur (4) aufgetragen, während in Figur (6) die druckfesten Auflagen (10') jeweils auf die beiden Metallbleche (8', 9') am Brennraumrand aufgetragen sind. In Figur 5 besteht die Flachdichtung aus einer einzigen Metallplatte (12). Am Brennraumrand (14) ist die druckfeste Auflage (13) aufgesintert und die Sicke (15) der Metallplatte (12) umgibt mit Abstand den Brennraumrand.

## Patentansprüche

1. Verfahren zur Herstellung einer ein- oder mehrlagigen Flachdichtung aus Metall, wie insbesondere eine Zylinderkopfdichtung oder eine Auspuff-Flanschdichtung für Verbrennungskraftmaschinen, mit Durchgangsöffnungen und Auflagen (3,3',3",10,10',13) aus druckfestem Material auf mindestens einer Metallplatte (1,4",5',5",9,9',12) zum Erzielen einer hohen Dichtpressung und damit einer Abdichtwirkung in definierten Bereichen, wobei die Auflagen (3,3',3",10,10',13) aus druckfestem Material auf mindestens einer Metallplatte (1,4",5',5",9,9',12) durch Sintern geformt werden, dadurch gekennzeichnet, daß das Material aus einem Metallpulver oder einem Metallegierungspulver in Gemisch mit einem Binde- und Lösungsmittel zunächst zu einer festflüssigen Auftragsmasse vermischt, diese anschließend im Siebdruckverfahren oder durch Schablonenspritzen auf die Metallplatte(n) (1,4",5',5",9,9',12) aufgetragen wird.

2. Verfahren nach Anspruch 1, dadurch gekennzeichnet, daß als Lösungsmittel Alkohol, Tuluol oder Trichlorethylen eingesetzt wird.

3. Verfahren nach Anspruch 1 und 2, dadurch gekennzeichnet, daß ein sinterfähiges Material aus 20 bis 70 Vol % Metallpulver eingesetzt wird.

4. Verfahren nach einem der Ansprüche 1 bis 3, dadurch gekennzeichnet, daß als Metallegierungspulver Bronzepulver eingesetzt werden.

5. Verfahren nach einem der Anspr|che 1 bis 4, dadurch gekennzeichnet, daß auf die Auftragsstellen der Metallplatte(n) (1, 5', 4", 5", 9, 9', 12) vor dem Auftrag des sinterfähigen Materials eine haftvermittelnde Schicht aus einem Haftmittel oder einem haftvermittelnden Lötzusatzstoff aufgetragen wird.

## Claims

1. A method of making a single or multilayer flat metal gasket, such as in particular a cylinder head gasket or an exhaust flange gasket for internal combustion engines, with through openings and coatings (3, 3', 3", 10, 10', 13) of pressure resistant material on at least one metal sheet (1, 4", 5', 5", 9, 9', 12) to obtain a high sealing pressure and thus a sealing action in defined regions, wherein the coatings (3, 3', 3", 10, 10', 13) are formed of pressure resistant material by sintering on at least one metal sheet (1, 4", 5', 5", 9, 9', 12), characterized in that the material is initially mixed to a stiffly fluid coating mass of a metal powder or a metal alloy powder in admixture with a binding and solvent medium, this mass then being applied to the metal sheet(s) (1, 4", 5', 5", 9, 9', 12) by silk-screen printing or by stencil spraying.

2. A method according to claim 1, characterized in that alcohol, toluol or trichloroethylene is used as the solvent medium.

3. A method according to claim 1 or 2, characterized in that a material which can be sintered of 20 to 70% by volume of metal powder is used.

4. A method according to any of claims 1 to 3, characterized in that bronze powder is used as a metal alloy powder.

5. A method according to any of claims 1 to 4, characterized in that an adhesion promoting layer of a binding medium or an adhesion promoting solder additive is applied to the coating sites of the metal sheet(s) (1, 4", 5', 5", 9, 9', 12) before the application of the sinterable material.

## Revendications

1. Procédé de fabrication d'un joint plat monocouche ou multicouche en métal, et en particulier un joint de tête de cylindre ou un joint de bride d'échappement pour machine à combustion interne, comportant des trous de passage et des appuis (3, 3', 3", 10, 10', 13) en matériau résistant à la pression et au moins une plaque de métal (1, 4", 5', 5", 9, 9', 12) pour l'obtention d'une haute compression étanche et ainsi une étanchéité dans des zones définies, les appuis (3, 3', 3", 10, 10', 13) en matériau résistant à la pression étant formés par frittage sur au moins une plaque de métal (1, 4", 5', 5", 9, 9', 12), caractérisé en ce que le matériau en poudre de métal ou en poudre d'alliage de métal est d'abord mélangé avec un liant et un dissolvant pour former une masse d'application solide liquide qui est ensuite appliquée par sérigraphie ou par pulvérisation au pochoir sur la ou les plaques de métal (1, 4", 5', 5", 9, 9', 12).

2. Procédé selon la revendication 1, caractérisé en ce que l'on utilise de l'alcool, du toluol, ou du trichloréthylène en tant que dissolvant.

3. Procédé selon les revendications 1 et 2, caractérisé en ce qu'un matériau frittable, constitué de 20 à 70% en volume de poudre métallique, est utilisé.

4. Procédé selon l'une des revendications 1 à 3, caractérisé en ce que l'on utilise de la poudre de bronze en tant que poudre d'alliage métallique.

5. Procédé selon l'une des revendications 1 à 4, caractérisé en ce qu'une couche favorisant l'adhésion constituée à partir d'un agent adhésif ou un additif de soudage favorisant l'adhésion est appliquée sur les zones d'application de la ou des plaques de métal (1, 4", 5', 5", 9, 9', 12) avant l'application du matériau frittable.
